# EUROPEAN PATENT SPECIFICATION

(11) **EP 3 637 794 B1**
(45) Date of publication and mention of the grant of the patent: **02.12.2020**
(21) Application number: 19172012.7
(22) Date of filing: 30.04.2019
(51) Int. Cl.: H04R 5/033, G02B 27/01

(54) **HEAD WEARABLE EQUIPMENT WITH ADJUSTABLE BONE-CONDUCTIVE ACOUSTIC DEVICE**
AM KOPF TRAGBARE AUSRÜSTUNG MIT VERSTELLBARER KNOCHENLEITENDER AKUSTISCHER VORRICHTUNG
ÉQUIPEMENT PORTABLE SUR LA TÊTE COMPORTANT UN DISPOSITIF ACOUSTIQUE À CONDUCTION OSSEUSE RÉGLABLE

(30) Priority: 21.09.2018 CN 201811105366
(43) Date of publication of application: 15.04.2020
(73) Proprietor: Nextvpu (Shanghai) Co., Ltd., Shanghai, 201203 (CN)
(72) Inventor: CAI, Haijiao, PUDONG NEW DISTRICT, Shanghai 201203 (CN); FENG, Xinpeng, PUDONG NEW DISTRICT, Shanghai 201203 (CN); ZHOU, Ji, PUDONG NEW DISTRICT, Shanghai 201203 (CN)
(74) Representative: Pronovem

(56) References cited:
- EP-A1- 3 329 792
- KR-B1- 100 865 959
- US-A1- 2011 051 960
- US-A1- 2012 082 333
- US-A1- 2016 060 926

## Description

### TECHNICAL FIELD

The present disclosure relates to the field of wearable equipment, and more particularly to a head wearable equipment with an adjustable bone-conductive acoustic device.

### BACKGROUND

Bone-conduction is one kind of sound conduction, which converts the sound into mechanical vibration of different frequencies, and transmits sound waves through human skull, bone labyrinth, inner ear lymphatic transmission, auger, auditory nerve, and auditory center. Compared to the classical sound transmission method that produces sound waves through the diaphragm, bone-conduction cancels many steps of sound wave transmission, enabling clear sound reproduction in noisy environments, and sound waves will not influence other people on account of spreading in the air. The original acoustic device utilizing bone-conduction mainly includes a bone-conductive earphone and a bone-conductive microphone.

Taking the bone-conductive earphone as example, the main structure of most of the current bone-conductive earphones includes two earphone portions and a rear connection rod connecting the earphone portions (as disclosed in US2014/0185837A1 or CN205179304U), and usually the earphone portions are fixed. The adaption of the bone-conductive earphone to the wearer's head form or facial form is adjusted mainly by adjusting the rear connection rod. When the bone-conductive earphone is integrated into other types of head wearable equipment (such as eyeglass, helmets, etc.), other methods are needed to adjust the wearing adaptability of the bone-conductive earphone since there is no component of rear connection rod any more.

Technology of placing a bone-conductive earphone on eyeglasses has been known in the prior art. As a common solution for solving the problem of adapting the bone-conductive earphone to the wearer's head form or facial form, the connecting component of the earphone and the wearing device or a component of the wearing device (such as a leg of eyeglasses) is made of resilient material. For example, in CN207184774U, the adaptability of a bone-conductive earphone disposed on the eyeglasses is improved by providing a housing including the bone-conductive earphone body and a corresponding clamping portion, and using an elastic material such as rubber, silicone or the like to produce the clamping portion. In CN206684411U, the adaptability of the bone-conductive earphones to different facial forms is realized mainly through elasticity by encapsulating the outer layer of the leg of eyeglasses with silicone. However, the disadvantages of this solution are apparent, including a small adjustable range, severe discomfort in clamping, and decreased adaptability due to aging of the elastic component after prolonged use.

CN107797308A discloses sunglasses that can adjust the position of a conduction earphone, wherein the bone-conductive earphone is connected to the leg of the sunglasses through a connection structure comprising a connecting plate which is fixed to the bone-conductive earphone and has a guide hole, a connecting groove which is located on the leg and into which the connecting plate extends, and a protruding rod which is located in the connecting groove and extends into the guiding hole, and the protruding rod is located in different positions of the guide hole by pushing or pulling the bone-conductive earphone to adjust the length of the bone-conductive earphone extending out of the connecting groove, thereby adjusting the bone-conductive earphone to fit different parts of the user's cheek. However, the structure only allows the bone-conductive earphone to translate in the direction of the leg of the eyeglass, and cannot move in other directions. That is, only the length of the bone-conductive earphone extending the leg of the eyeglasses can be adjusted. The adjustment range is very small. Meanwhile, the adjustment structure such as guiding rod, etc. is easy to expose, which is not beautiful. In addition, due to the groove and push-pull guiding rod structure, it is easy to pinch the user's hair, resulting in discomfort.

EP 3 329 792A1 discloses a cycling helmet capable of switching a sound production guidance mode based on a bone conduction earphone 200. The cycling helmet includes a helmet body and the bone conduction earphone disposed on the helmet body, wherein the bone conduction earphone is rotatably connected with the helmet body.

US 2016/060926 A1 discloses a rotary device, for example, a bone conduction speaker, capable of detachably attached to an external object such as a temple of an eyeglass frame.

KR 100 865 959 B1 discloses an earphone device for attaching to glasses. A hanger protrudes toward the rear outer end of the frame of the glasses, and a shaft protrudes from one side thereof. The earphone device is rotatably assembled to the hanger of the frame.

US 2012/082333 A1 discloses a behind-the-head mounted personal audio set that allows a mono-aural personal audio device to be worn in either a wearer's left or right ear without the need to remove or detach individual components of the person audio set. A resilient O-ring is positioned between a recess and a protrusion of the headset mount to create frictional holding force.

US 2011/051960 A1 discloses an acoustic headset, in which the half shells of the housings of the acoustic member are, for example, of plastics material and injection-moulded.

### SUMMARY

Based on the above, there is a need to provide a head mounted device of a bone-conductive acoustic device that has a large adjustable range, strong adaptability and high comfortability.

Based on this need, the present disclosure provides the following equipment: a head mounted bone-conductive acoustic device comprising a head wearable equipment and a bone-conductive acoustic member, wherein the bone-conductive acoustic member is one of or a combination of several of a bone-conductive earphone, a speaker or a microphone, and wherein the bone-conductive acoustic member is at least rotatably connected to the head wearable equipment by a connection structure.

The present invention is defined in appended claim 1.

According to an aspect of the present disclosure, a head wearable equipment in the head mounted bone-conductive acoustic device of the present disclosure includes, but is not limited to, eyeglasses, a mask, a helmet, a cap, a head mounted display, a head mounted light, a virtual reality equipment, a head mounted fan, a head mounted gaming equipment, a head mounted medical equipment, a head mounted control device, and a head mounted intercommunication device. The eyeglasses include, but are not limited to, ordinary optical eyeglasses or smart eyeglasses having computing or communication function; the head mounted medical equipment includes, but is not limited to, a head mounted blood pressure measuring device; the head mounted control device includes, but is not limited to, a voice control device.

According to an aspect of the present disclosure, the bone-conductive acoustic member in the head mounted bone-conductive acoustic device of the present disclosure is a bone-conductive earphone or a bone-conductive microphone or a combination of both.

According to an aspect of the present disclosure, the head wearable equipment in the head mounted bone-conductive acoustic device of the present disclosure is eyeglasses, including ordinary optical eyeglasses or smart eyeglasses having computing function or communication function.

According to the invention, the eyeglasses include a leg to which the bone-conductive acoustic member is connected by a rotation structure including a rotating shaft bracket and a connecting member, wherein the rotating shaft bracket is connected to the leg and is provided with a hole. According to a preferred aspect of the present disclosure, the rotating shaft bracket is fixedly connected to the leg by snapping, riveting, screwing, spiral connection, or integral molding.

According to the invention, the bone-conductive acoustic member at least includes two housings, respectively a first housing and a second housing; the connecting member of the rotation structure includes a rotating shaft, which is connected to the inner side of the first housing at one end and is connected to the inner side of the second housing after passing through the hole in the rotating shaft bracket. According to another aspect of the present disclosure a gasket is arranged between the first or the second housing and the rotating shaft bracket to increase damping, and the gasket can increase the friction between the inner wall of the housing and the rotating shaft bracket, preventing the bone-conductive acoustic device from sliding freely on the rotating shaft, thereby locking the bone-conductive acoustic device to a specified position by friction. According to a preferred aspect of the present disclosure, the connection manner of the rotating shaft to the inner side of the first housing is selected from one of the following first connection manner or second connection manner: the first connection manner is configured as follows: the one end of the rotating shaft and the first housing are respectively provided with texturing structure at the portions where they are connected, and the first housing is provided with a mounting groove, the texturing structure of the rotating shaft is engaged with the texturing structure of the first housing, and the rotating shaft is inserted in the mounting groove of the first housing, the texturing structures providing an engaging force to prevent slippage between the rotating shaft and the housing; the second connection manner is configured as follows: one end of the rotating shaft is integrally formed on and connected to the inner side of the first housing. According to a preferred aspect of the present disclosure, the above gasket includes a metal gasket, a silicone gasket, and a rubber gasket.

According to an aspect of the present disclosure, the rotating shaft is connected to the inner side of the second housing after passing through the hole in the rotating shaft bracket, and the rotating shaft is connected to the second housing by a fixing member. According to a preferred aspect of the present disclosure, the fixing member includes a screw, a bolt, and a connector with an extending end, and the connection includes inserting connection, snapping connection, plugging-in connection, threaded connection, welding, riveting, screw fixing; a gasket is optionally provided between the fixing member and the second housing.

According to a preferred embodiment of the present disclosure, the present disclosure provides eyeglasses having a rotatable bone-conductive earphone which comprises eyeglasses, a bone-conductive earphone, and a rotation structure connecting both, wherein the eyeglasses comprise a leg, the bone-conductive earphone comprises two housings, respectively a first housing and a second housing, the rotation structure comprises a rotating shaft bracket and a connecting member, the rotation shaft bracket is provided with a hole, and the connecting member comprises a rotating shaft and a fixing member; wherein one end of the rotating shaft and the first housing of the bone-conductive earphone are provided with a texturing structure, and a mounting groove for providing the texturing structure is formed in the first housing;
wherein, the rotating shaft bracket is connected to the leg by snapping, riveting, screwing, spiral connection, or integrally molding; the rotating shaft and the first housing of the bone-conductive earphone are connected with each other by the texturing structures, and then the texturing structures are inserted in the mounting groove of the first housing, and after passing through the hole in the rotating shaft bracket the rotating shaft is connected to the second housing by the fixing member, and a gasket is arranged between the first or the second housing and the rotating shaft bracket to increase damping. The gasket is a metal gasket, a silicone gasket or a rubber gasket.

Advantageous effects of the present disclosure include: a solution for a rotatable bone-conductive earphone that can be adaptively adjusted according to a wearer's head form or facial form is provided, wherein the bone-conductive acoustic device can be rotatably moved relative to the rotatable bone-conductive headphone in accordance with the head form or facial form of different wearers, so that the solution has a large adjustable range, strong adaptability, high comfort and a wide application range.

### BRIEF DESCRIPTION OF THE DRAWINGS

Fig. 1 is a schematic view of the eyeglasses having a rotatable bone-conductive earphone according to an embodiment of the present disclosure;
Figs. 2A and 2B are schematic views of the eyeglasses having the rotatable bone-conductive earphone according to an embodiment of the present disclosure after the bone-conductive earphone is retracted (Fig. 2A) and rotates (Fig. 2B);
Figs. 3 A and 3B are respectively a schematic view of the components of the eyeglasses having the rotatable bone-conductive earphone according to an embodiment of the present disclosure (Fig. 3A) and a schematic view after the components are assembled (Fig. 3B);
Fig. 4 is a schematic view showing a connecting structure of a leg and a rotating shaft bracket of the eyeglasses having the rotatable bone-conductive earphone according to an embodiment of the present disclosure;
Figs. 5A and 5B are schematic views of a rotating shaft of the eyeglasses having a rotatable bone-conductive earphone and a housing of the bone-conductive earphone according to an embodiment of the present disclosure, wherein there is a gasket (Fig. 5B) or there is no gasket (Fig.5A) provided between the rotating shaft and the housing of the bone-conductive earphone;
Fig.6 is a schematic view showing the connection of the leg of the eyeglasses having a rotatable bone-conductive earphone and the bone-conductive earphone according to an embodiment of the present disclosure;

Reference numbers in the drawings are: 10-rotating shaft bracket, 11-mounting hole with internal thread, 12-hole, 21- second housing of bone-conductive earphone, 22- first housing of bone-conductive earphone, 221-mounting groove, 31-rotating shaft, 32-screw, 40-leg, 41-mounting hole, and 50-gasket.

### DETAILED DESCRIPTION OF THE EMBODIMENTS

The present disclosure will be further described in detail below with reference to the accompanying drawings.

### 1^{st} Embodiment: Eyeglasses of a bone-conductive earphone having a rotatable structure

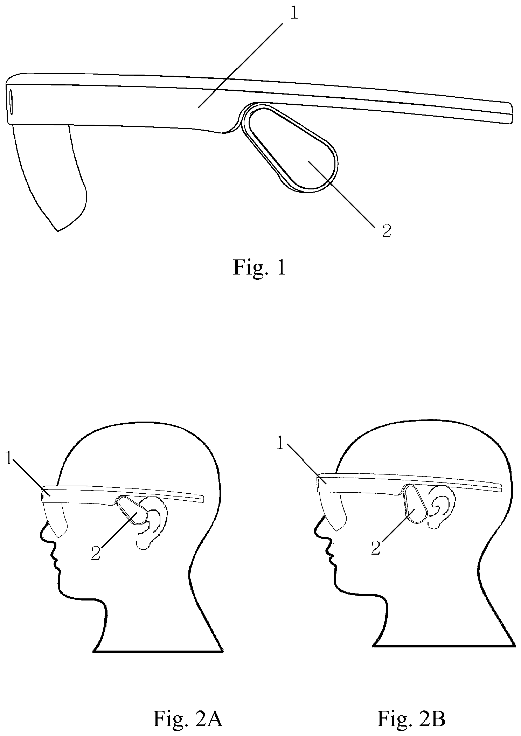

This embodiment provides eyeglasses 1 with a bone sensing earphone 2, the overall appearance of which is shown in Figs. 1 and 2. Fig. 1 is a side view of the eyeglasses 1, and Fig. 2 is a side view of the eyeglasses 1 with the earphone 2 in the retracted state (Fig. 2A) and in the rotated state (Fig. 2B).

The eyeglasses 1 include lenses, a frame, and a leg. The structures of the lenses and frame are structures of the conventional eyeglasses in the art. According to the different types of eyeglasses, those skilled in the art can select lenses or frame of suitable structures. For example, the eyeglasses according to the present embodiment are ordinary eyeglasses or smart eyeglasses, and those skilled in the art can select corresponding structures of lenses and frame.

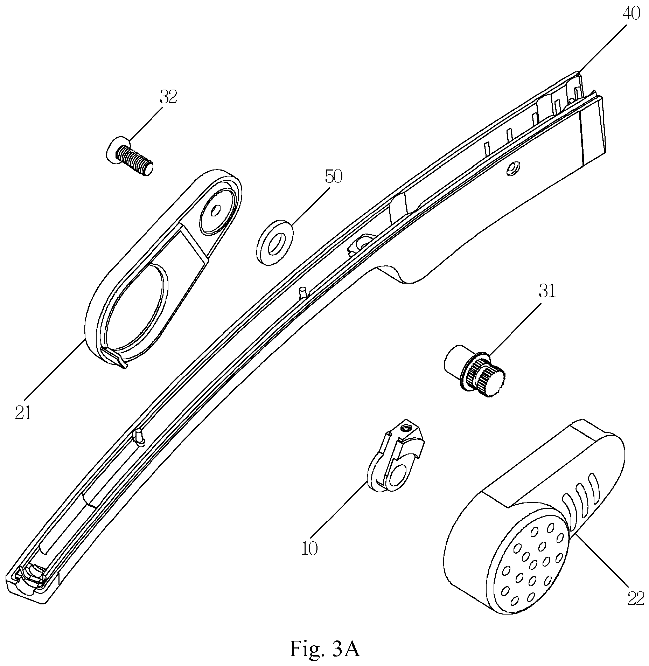

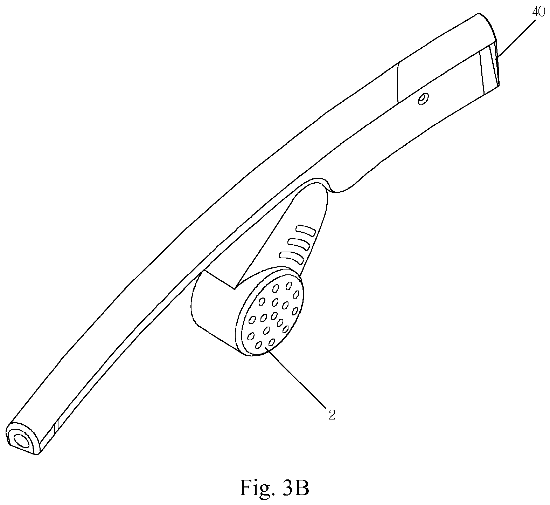

As shown in Fig. 3, the bone-conductive earphone 2 described above is rotatably connected to the leg 40 of eyeglasses by a connecting structure which comprises a rotating shaft bracket 10 and a connecting member. The bone-conductive earphone comprises a first housing 22 and a second housing 21 of bone-conductive earphone, and the connecting member comprises a rotating shaft 31 and a screw 32 (also referred to as fixing member).

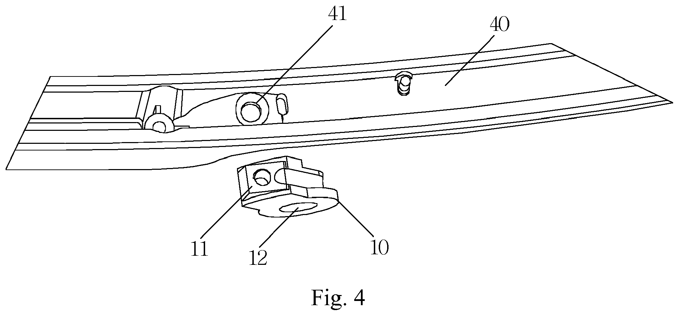

As shown in Fig. 4, the leg 40 of eyeglasses has a connection point to the rotating shaft bracket 10. The connection between the rotating shaft bracket 10 and the leg 40 is configured as conventional connection in the art, such as screwing, snapping connection, plugging-in connection, inserting connection and the like. For example, when screwing is used, the connection point is located at a mounting hole 41. A mounting hole 11 having an internal thread is provided in the rotating shaft bracket. The screw is screwed into the mounting hole 11 through the mounting hole 41, thereby fixing the rotating shaft bracket 10 onto the leg 40. In addition, the rotating shaft bracket 10 is also provided with a hole 12 through which the rotating shaft 31 can pass.

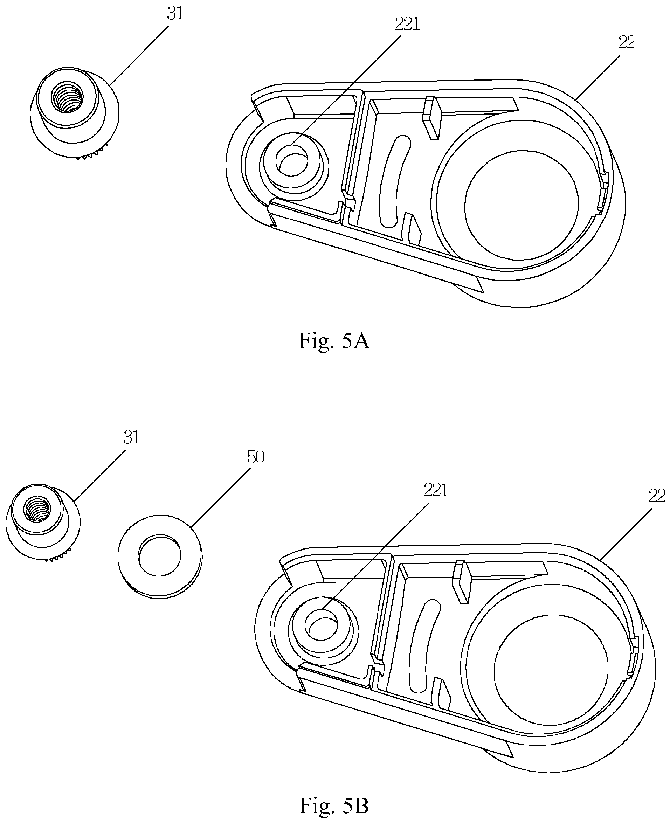

As shown in Figs. 5A and 5B, the inner side of the first housing 22 of bone-conductive earphone is provided at one end with a mounting groove 221 having a texturing structure. The rotating shaft 31 is also provided with a texturing structure at one end, and is inserted in the mounting groove 221 to connect the rotating shaft 31 with the first housing 22 of the bone-conductive earphone. By the engaging force provided by the texturing structure, slippage between the rotating shaft 31 and the first housing 22 can be avoided. The texturing structure can be formed as follows: placing the rotating shaft in a mold for injecting the housing; forming the housing by means of injection molding, wherein after the injection molding, a housing to which the rotating shaft is connected is formed, and wherein in the process of injection molding, a structure engaged with the textures of the rotating shaft end is correspondingly formed in the inner wall of the mounting groove of the housing.

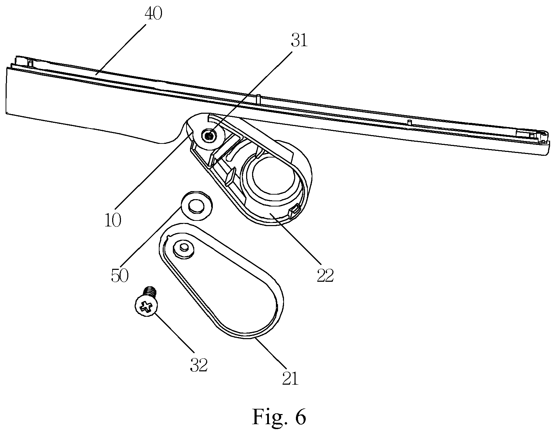

After the rotating shaft bracket 10 and the leg 40 are connected, and the rotating shaft 31 and the first housing 22 of bone-conductive earphone are connected, as shown in Fig. 6, the other end of the rotating shaft 31 is passed through the hole 12 in the shaft bracket 10; on the other side, a screw 32 passes through the hole in the second housing 21 from the outer side of the second housing 21 to the inner side of the second housing 21 and is screwed into the rotating shaft 31 having internal thread, so that the second housing 21 of the bone-conductive earphone could be connected to the rotating shaft bracket. A washer may be provided between the screw 32 and the second housing 21 to avoid causing wear to the housing during the screwing-in of the screw.

A gasket 50 is further disposed between the first housing 22 or the second housing 21 of the bone-conductive earphone and the rotating shaft bracket 10, and the gasket may be a metal gasket, a silicone gasket, or a rubber gasket. For example, the gasket 50 may be disposed between the second housing 21 and the rotating shaft bracket 10 (as shown in Fig. 3A); for example, the gasket 50 is disposed between the first housing 22 and the rotating shaft bracket 10, and specifically, may be disposed between the rotating shaft 31 and the first housing 22 (as shown in Fig. 5B), and alternatively, may be disposed between the rotating shaft 31 and the rotating shaft bracket 10. The gasket 50 can increase the friction between the inner wall of the housing and the rotating shaft bracket, that is, increase the damping, thereby preventing the bone-conductive earphone from sliding freely on the rotating shaft. When an adjustment by means of rotation is needed, the rotation is possible only when an external force (such as pushing by hand) is applied. In this way, the bone-conductive earphone is locked in a designated position.

### 2^{nd} Embodiment: Eyeglasses with a bone-conductive earphone having a rotatable structure

The present embodiment provides a pair of eyeglasses with a bone sensing earphone, which has a structure substantially identical to the eyeglasses of the first embodiment. The difference only lies in the connection between the rotating shaft 31 and the first housing 22. The texturing structure in the first embodiment is replaced by an integrally formed connection between the rotating shaft 31 and the first housing 22, which will not slide relative to each other. This kind of connection can be simultaneously formed by means of injection molding when the first housing 22 is injection molded.

The above embodiments are merely illustrative, but not intended to limit the technical solutions of the present disclosure. Although the present disclosure has been described in detail with reference to the foregoing embodiments, those skilled in the art should understand that the technical solutions described in the foregoing embodiments may be modified, or some of the technical features may be equivalently replaced.

## Claims

1. A head mounted bone-conductive acoustic device, comprising:
a head wearable equipment which is eyeglasses (1) comprising a leg (40),
a bone-conductive acoustic member, and
a connection structure, through which the bone-conductive acoustic member is at least rotatably connected to the leg of the head wearable equipment,
the connection structure includes a rotating shaft bracket (10) and a connecting member, the rotating shaft bracket (10) being connected to the leg (40), **characterized in that**
the rotating shaft bracket (10) is provided with a hole (12) to be passed through by the connecting member, and
the bone-conductive acoustic member comprises at least two housings, respectively a first housing (22) and a second housing (21), and the connecting member comprises a rotating shaft (31), which is connected to an inner side of the first housing (22) at one end and connected to an inner side of the second housing (21) after passing through the hole (12) in the rotating shaft bracket (10).

2. The head mounted bone-conductive acoustic device according to claim 1, wherein the eyeglasses (1) comprise ordinary optical eyeglasses or smart eyeglasses having computing or communication function; and wherein the bone-conductive acoustic member is a bone-conductive earphone (2) or a bone-conductive microphone or a combination of both.

3. The head mounted bone-conductive acoustic device according to claim 2, wherein the rotating shaft bracket (10) is fixedly connected to the leg (40) by means of snapping, riveting, screwing, spiral connection, or integral molding.

4. The head mounted bone-conductive acoustic device according to any one of claims 2 or 3, wherein a gasket (50) is provided between the first (22) or the second housing (21) and the rotating shaft bracket (10) to increase damping.

5. The head mounted bone-conductive acoustic device according to claim 1, wherein the connection of the rotating shaft (31) to the inner side of the first housing (22) is selected from one of a first connection manner or a second connection manner,
wherein the first connection manner is configured such that the one end of the rotating shaft (31) is provided with a texturing structure, the inner side of the first housing (22) includes a mounting hole (221) provided with a texturing structure, and the texturing structure of the rotating shaft (31) is engaged with the texturing structure of the mounting hole (221) when the rotating shaft (31) is inserted in the mounting hole (221) of the first housing (22); and
wherein the second connection manner is configured such that one end of the rotating shaft (31) is integrally formed on and connected to the inner side of the first housing (22).

6. The head mounted bone-conductive acoustic device according to claim 5, wherein the rotating shaft (31) is connected to the inner side of the second housing (21) after passing through the hole (12) in the rotating shaft bracket (10), and the rotating shaft (31) is connected to the second housing (21) by a use of a fixing member including a screw, a bolt, and a connector with an expanding end, the connection including inserting connection, snapping connection, plugging-in connection, threaded connection, welding, and riveting; wherein the fixing member passes through the second housing (21) from outside to inside and connected to the rotating shaft (31), and a washer is optionally provided between the fixing member and the second housing (21).

7. The head mounted bone-conductive acoustic device according to claim 4, wherein the gasket (50) comprises a metal gasket, a silicone gasket, or a rubber gasket.

8. The head mounted bone-conductive acoustic device according to any one of claims 5 to 7, wherein the texturing structure of the first housing engaged with the texturing structure of the one end of the rotating shaft (31) is formed in the inner wall of the mounting hole (221) of the first housing (22) by placing the one end of the rotating shaft (31) in a mold for injecting the first housing (22) and forming the first housing (22) by means of injection molding.

## Patentansprüche

1. Eine am Kopf montierte knochenleitende akustische Vorrichtung, umfassend:
eine am Kopf tragbare Ausrüstung, wobei es sich um eine Brille (1) handelt, umfassend einen Bügel (40),
ein knochenleitendes akustisches Element, und
eine Verbindungsstruktur, durch die das knochenleitende akustische Element mindestens drehbar mit dem Bügel der am Kopf tragbaren Ausrüstung verbunden ist,
die Verbindungsstruktur eine drehende Wellenklammer (10) und ein Verbindungselement beinhaltet, wobei die drehende Wellenklammer (10) mit dem Bügel (40) verbunden ist,
**dadurch gekennzeichnet, dass**
die drehende Wellenklammer (10) mit einem Loch (12) ausgestattet ist, damit das Verbindungselement dadurch verläuft, und
das knochenleitende akustische Element mindestens zwei Gehäuse, jeweils ein erstes Gehäuse (22) und ein zweites Gehäuse (21), umfasst, und das Verbindungselement eine drehende Welle (31) umfasst, die an einem Ende mit einer inneren Seite des ersten Gehäuses (22) verbunden ist und mit einer inneren Seite des zweiten Gehäuses (21), nachdem sie durch das Loch (12) in der drehenden Wellenklammer (10) verläuft, verbunden ist.

2. Die am Kopf montierte knochenleitende akustische Vorrichtung nach Anspruch 1, wobei die Brille (1) eine gewöhnliche optische Brille oder eine intelligente Brille, die eine Berechnungs- oder Kommunikationsfunktion aufweist, umfasst; und wobei das knochenleitende akustische Element ein knochenleitender Ohrhörer (2) oder ein knochenleitendes Mikrophon oder eine Kombination aus beiden ist.

3. Die am Kopf montierte knochenleitende akustische Vorrichtung nach Anspruch 2, wobei die drehende Wellenklammer (10) fest mit dem Bügel (40) mit Hilfe von Schnappen, Nieten, Schrauben, Spiralverbinden oder Integralgießen verbunden ist.

4. Die am Kopf montierte knochenleitende akustische Vorrichtung irgend einem der Ansprüche 2 oder 3, wobei eine Dichtung (50) zwischen dem ersten (22) oder dem zweiten Gehäuse (21) und der drehenden Wellenklammer (10) bereitgestellt ist, um die Dämpfung zu erhöhen.

5. Die am Kopf montierte knochenleitende akustische Vorrichtung nach Anspruch 1, wobei die Verbindung der drehenden Welle (31) mit der inneren Seite des ersten Gehäuses (22) ausgewählt ist aus einer ersten Verbindungsart oder einer zweiten Verbindungsart,
wobei die erste Verbindungsart derart konfiguriert ist, dass das eine Ende der drehenden Welle (31) mit einer Texturierungsstruktur ausgestattet ist, die innere Seite des ersten Gehäuses (22) ein Montageloch (221), das mit einer Texturierungsstruktur ausgestattet ist, beinhaltet, und die Texturierungsstuktur der drehenden Welle (31) mit der Texturierungsstruktur des Montagelochs (221), wenn die drehende Welle (31) in das Montageloch (221) des ersten Gehäuses (22) eingeführt ist, eingegriffen ist; und
wobei die zweite Verbindungsart derart konfiguriert ist, dass ein Ende der drehenden Welle (31) auf der inneren Seite des ersten Gehäuses (22) einstückig gebildet und damit verbunden ist.

6. Die am Kopf montierte knochenleitende akustische Vorrichtung nach Anspruch 5, wobei die drehende Welle (31) mit der inneren Seite des zweiten Gehäuses (21), nachdem sie durch das Loch (12) in der drehenden Wellenklammer (10) verläuft, verbunden ist, und die drehende Welle (31) mit dem zweiten Gehäuse (21) durch eine Verwendung eines Befestigungselements, darin eingeschlossen eine Schraube, ein Bolzen und ein Verbinder mit einem expandierenden Ende, verbunden ist, wobei die Verbindung eine Einführungsverbindung, eine Schnappverbindung, eine Einsteckverbindung, eine gewindegeschnittene Verbindung, Schweißung und Nietung umfasst; wobei das Fixierungselement durch das zweite Gehäuse (21) von außen nach innen und verbunden mit der drehenden Welle (31) verläuft, und eine Unterlagscheibe optional zwischen dem Fixierungselement und dem zweiten Gehäuse (21) bereitgestellt ist.

7. Die am Kopf montierte knochenleitende akustische Vorrichtung nach Anspruch 4, wobei die Dichtung (50) eine Metalldichtung, eine Silikondichtung oder eine Gummidichtung umfasst.

8. Die am Kopf montierte knochenleitende akustische Vorrichtung nach irgendeinem der Ansprüche 5 bis 7, wobei die Texturierungsstruktur des ersten Gehäuses, eingegriffen mit der Texturierungsstuktur des einen Endes der drehenden Welle (31) in der inneren Wand des Montagelochs (221) des ersten Gehäuses (22) durch Platzieren des einen Endes der drehenden Welle (31) in einer Form zum Spritzen des ersten Gehäuses (22) und Bilden des ersten Gehäuses (22) mit Hilfe von Spritzguss gebildet ist.

## Revendications

1. Dispositif acoustique à conduction osseuse pouvant être porté sur la tête, comprenant :
un équipement pouvant être porté sur la tête qui est représenté par des lunettes (1) comprenant une branche (40),
un élément acoustique à conduction osseuse, et
une structure de raccordement, par le biais de laquelle l'élément acoustique à conduction osseuse est au moins raccordé en rotation à la branche de l'équipement pouvant être porté sur la tête,
la structure de raccordement comprend un support d'arbre rotatif (10) et un élément de raccordement, le support d'arbre rotatif (10) étant raccordé à la branche (40),
**caractérisé en ce que** :
le support d'arbre rotatif (10) est prévu avec un trou (12) destiné à être traversé par l'élément de raccordement, et
l'élément acoustique à conduction osseuse comprend au moins deux boîtiers, respectivement un premier boîtier (22) et un second boîtier (21), et l'élément de raccordement comprend un arbre rotatif (31) qui est raccordé à un côté interne du premier boîtier (22) au niveau d'une extrémité et raccordé à un côté interne du second boîtier (21) après avoir traversé le trou (12) dans le support d'arbre rotatif (10).

2. Dispositif acoustique à conduction osseuse pouvant être porté sur la tête selon la revendication 1, dans lequel :
les lunettes (1) comprennent des lunettes optiques ordinaires ou des lunettes intelligentes ayant une fonction de calcul ou de communication, et dans lequel l'élément acoustique à conduction osseuse est un écouteur à conduction osseuse (2) ou un microphone à conduction osseuse ou une combinaison des deux.

3. Dispositif acoustique à conduction osseuse pouvant être porté sur la tête selon la revendication 2,
dans lequel le support d'arbre rotatif (10) est raccordé de manière fixe à la branche (40) au moyen d'encliquetage, rivetage, vissage, raccordement à spirale ou moulage solidaire.

4. Dispositif acoustique à conduction osseuse pouvant être porté sur la tête selon l'une quelconque des revendications 2 ou 3, dans lequel un joint (50) est prévu entre le premier (22) ou le second boîtier (21) et le support d'arbre rotatif (10) pour augmenter l'amortissement.

5. Dispositif acoustique à conduction osseuse pouvant être porté sur la tête selon la revendication 1, dans lequel :
le raccordement de l'arbre rotatif (31) au côté interne du premier boîtier (22) est sélectionné parmi une d'une première façon de raccordement ou d'une seconde façon de raccordement,
dans lequel la première façon de raccordement est configurée de sorte que la une extrémité de l'arbre rotatif (31) est prévue avec une structure de texturation, le côté interne du premier boîtier (22) comprend un trou de montage (221) prévu avec une structure de texturation, et la structure de texturation de l'arbre rotatif (31) est en mise en prise avec la structure de texturation du trou de montage (221) lorsque l'arbre rotatif (31) est inséré dans le trou de montage (221) du premier boîtier (22) ; et
dans lequel la seconde façon de raccordement est configurée de sorte qu'une extrémité de l'arbre rotatif (31) est formée de manière solidaire sur et raccordée au côté interne du premier boîtier (22).

6. Dispositif acoustique à conduction osseuse pouvant être porté sur la tête selon la revendication 5, dans lequel :
l'arbre rotatif (31) est raccordé au côté interne du second boîtier (21) après avoir traversé le trou (12) dans le support d'arbre rotatif (10), et l'arbre rotatif (31) est raccordé au second boîtier (21) à l'aide d'un élément de fixation comprenant une vis, un boulon, et un connecteur avec une extrémité d'expansion, le raccordement comprenant le raccordement par insertion, le raccordement par encliquetage, le raccordement par enfichage, le raccordement fileté, le soudage et le rivetage ; dans lequel l'élément de fixation passe à travers le second boîtier (21) de l'extérieur vers l'intérieur et est raccordé à l'arbre de rotation (31), et une rondelle est facultativement prévue entre l'élément de fixation et le second boîtier (21).

7. Dispositif acoustique à conduction osseuse pouvant être porté sur la tête selon la revendication 4, dans lequel :
le joint (50) comprend un joint métallique, un joint en silicone ou un joint en caoutchouc.

8. Dispositif acoustique à conduction osseuse pouvant être porté sur la tête selon l'une quelconque des revendications 5 à 7, dans lequel la structure de texturation du premier boîtier mis en prise avec la structure de texturation de la une extrémité de l'arbre rotatif (31) est formée dans la paroi interne du trou de montage (221) du premier boîtier (22) en plaçant la une extrémité de l'arbre rotatif (31) dans un moule pour injecter le premier boîtier (22) et former le premier boîtier (22) au moyen du moulage par injection.
